(19)

**Europäisches Patentamt**

**European Patent Office**

**Office européen des brevets**

(11) **EP 4 778 948 A1**

(12) **EUROPEAN PATENT APPLICATION**

(43) Date of publication:
22.07.2026 Bulletin 2026/30

(21) Application number: 25153188.5

(22) Date of filing: 21.01.2025

(51) International Patent Classification (IPC):
*C08F 210/06* (2006.01)    *B32B 27/32* (2006.01)
*C08L 23/14* (2006.01)

(52) Cooperative Patent Classification (CPC):
(C-Sets available)
**C08F 210/06; C08J 5/18;** B32B 27/32;
C08J 2323/12; C08J 2323/14; C08J 2423/16;
C08L 2207/02                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Lummus Novolen Technology GmbH
68165 Mannheim (DE)**

(72) Inventor: **Räntzsch,, Volker Andreas
68165 Mannheim (DE)**

(74) Representative: **Osha BWB
2, rue de la Paix
75002 Paris (FR)**

(54) **HETEROPHASIC PROPYLENE COPOLYMER COMPOSITIONS WITH IMPROVED SEAL STRENGTH**

(57)    A heterophasic propylene copolymer composition and a process for producing the same are disclosed. The heterophasic propylene copolymer composition comprises: (a) from 74 to 93 wt% of a propylene polymer matrix comprising: either a propylene homopolymer; or a propylene copolymer comprising less than 0.5 wt% of a comonomer based on the total weight of the propylene polymer matrix; and (b) from 7 to 26 wt% of a propylene ethylene copolymer dispersed in the propylene polymer matrix. The heterophasic propylene copolymer composition has an analytical temperature rising elution fractionation, ATREF, peak temperature (T3) lower than or equal to 117.0°C, the ATREF peak temperature (T3) being determined by a CRYSTAF-TREF instrument, comprises an ethylene content in the range of from 4.0 to 17 wt% based on the total weight of the heterophasic propylene copolymer composition, the ethylene content being determined by Fourier Transform Infrared (FTIR) spectroscopy, and has a xylene soluble content, XS, in a range of from 9 to 22 wt%, as determined according to ISO 16152:2022.

EP 4 778 948 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/651;**
**C08F 210/06, C08F 4/6548;**
**C08L 23/14, C08L 23/16;**
C08F 210/06, C08F 210/16, C08F 2500/27,
C08F 2500/12, C08F 2500/37;
C08F 210/06, C08F 210/16, C08F 2500/27,
C08F 2500/12, C08F 2500/37, C08F 2500/26,
C08F 2500/35, C08F 2500/17, C08F 2500/35,
C08F 2500/31

**Description**

<u>Technical Field</u>

The present disclosure relates to a heterophasic propylene copolymer composition, a process for producing the same, a use of the heterophasic propylene copolymer composition as well as an article comprising the heterophasic propylene copolymer composition.

<u>Background Art</u>

Heterophasic propylene copolymer compositions, also known as propylene impact copolymers, are compositions comprising a propylene polymer matrix and a propylene ethylene copolymer dispersed in the propylene polymer matrix. The propylene polymer matrix may include either a propylene homopolymer or a propylene copolymer.

Heterophasic propylene copolymers may be produced in two or more polymerization stages in a cascade set-up, for example two or more polymerization reactors arranged in series. Commonly, a highly crystallizable propylene polymer matrix is polymerized in a first polymerization stage in the presence of a catalyst, for example a Ziegler-Natta catalyst, and is then transferred to a second polymerization stage, in which a rubbery ethylene propylene copolymer is polymerized. As used herein, a "crystallizable" polymer is a polymer that is capable of crystallizing, for example when cooled to below its crystallization temperature.

Different internal donors (ID) of Ziegler-Natta catalysts may be used. Known internal donors include phthalates, diethers, succinates, citraconates, or further diester-based donors (Paulik, Christian, et al. Macromol. Chem. Phys. 2021, 222, 2100302).

External donors based on organosilanes may be used to control isotacticity, hydrogen response, and copolymerization kinetics during polymerization. Commonly used external donors include cyclohexylmethyl-dimethoxysilane and dicyclopentyl-dimethoxysilane. External donors are typically used in high amounts to achieve a highly crystallizable propylene polymer matrix. An example of use of a high amount of external donor (Si) with respect to a titanium component (Ti) of the Ziegler-Natta catalyst is provided by EP 3 650 494 A2. In particular, EP 3 650 494 A2 discloses a Si/Ti molar ratio equal to 12.

The properties of heterophasic propylene copolymers depend on a number of parameters, such as, for example, the intrinsic viscosity and the molecular weight distribution of the propylene polymer matrix and the ethylene propylene copolymer, the ethylene content of the ethylene propylene copolymer, and the incorporation of ethylene into the ethylene propylene copolymer (Pasquini, N., Polypropylene Handbook, 2nd Ed., 2005.). For example, it is believed that high ethylene content of the ethylene propylene copolymer provides better cold temperature impact resistance than low ethylene content. Similarly, high intrinsic viscosity of the ethylene propylene copolymer is expected to provide better cold temperature impact resistance compared to low intrinsic viscosity. However, it is known that high ethylene content and intrinsic viscosity of the ethylene propylene copolymer lead to a decreased compatibility of the matrix and copolymer phases. Thus, strong nonlinear rheological behavior is expected during processing, which may lead to process instabilities, which is undesirable.

Heterophasic propylene copolymers can be used as sealing layer materials in films that may be subjected to retorting at elevated temperatures, such as at 120°C, for a certain period, e.g., 30 min. The high melting point of heterophasic propylene copolymers ensures seal integrity during retorting. However, the seal strength is dependent on the melting point, as described by Morris, Barry A., "The Science and Technology of Flexible Packaging: Multilayer Films from Resin and Process to End Use", William Andrew, 2017, Pages 181-257. This text states that a sealant requires a balance of properties to ensure good performance, namely a low melting point to allow the molecular chains enough mobility to diffuse and build strength across the interface between the polymer matrix and the copolymer dispersed phase, and high enough crystallinity to help aid in the buildup of that strength.

That high crystallinity is beneficial to interfacial strength in heat seals is also disclosed by EP 2 829 397 A1. In particular, the detailed examples of this document show that for achieving high seal strength as well as high cold temperature impact strength, a higher crystallizability of the polymer matrix is beneficial. With reference to Examples 2 and 6 of EP 2 829 397 A1, different external donors were used that are known to produce polymers having different crystallizabilities. The polymer with lower crystallizability of the matrix, presenting a higher XSa (xylene soluble content) value of 2.4 wt% (Example 2), shows a lower cold temperature impact resistance and a lower seal strength than the polymer with a higher crystallizability of the matrix, presenting a lower XSa value of 1.8 wt% (Example 6).

Thus, conventional heterophasic propylene copolymers generally lack sufficient seal strength in film applications. Prior attempts to improve seal strength based on different approaches inevitably jeopardize other properties. Among the known approaches, EP 3 650 494 A2 provides increasing the copolymer fraction, which however leads to high hexane extractables, which is undesirable for food-contact applications. WO 2022/263345 A1 discloses the use of a single-site catalyst for the polymerization, which however results in a low melting point and therefore in poor resistance during retorting and poor physical properties such as poor stiffness. Additionally, the low availability and high costs of single site catalysts render them of limited use at industrial scale. EP 3 526 286 B1 and EP 2 829 397 A1 indicate that lowering the ethylene content of the ethylene propylene copolymer is made at the expense of physical properties, such as poor cold temperature impact resistance. A still further approach, followed by EP 3 526 286 B1, is based on the use of a nucleating agent, which alone however is not sufficient to achieve the desired seal strengths for hermetic seals. Moreover, EP 3 456 776 A1 provides blending of a heterophasic propylene copolymers with other polymers, e.g., propylene-hexene random copolymers, which however requires an additional compounding step. Additionally, such polymers may not be obtainable because of lack of feedstock or a suitable catalyst, and/or due to process technology limitations.

Thus, there is an unmet need to develop heterophasic propylene copolymer compositions providing high seal strengths, even at low sealing temperatures, a high melting point, and favorable physical properties, e.g., high cold temperature impact resistance, while presenting a low nonlinear rheological behavior for improved processability.

<u>Summary</u>

The Applicant has surprisingly found that reducing crystallizability of a propylene polymer matrix to a predetermined level and using no comonomer or a very low amount thereof (*i.e.,* less than 0.5 wt%) during the propylene polymer matrix polymerization improve the sealing behavior, cold temperature impact resistance, and nonlinear rheological behavior of a heterophasic propylene copolymer composition comprising, in addition to the propylene polymer matrix, also a propylene ethylene copolymer dispersed in the propylene polymer matrix, while maintaining sufficiently high melting point and stiffness of the heterophasic propylene copolymer composition, provided the heterophasic propylene copolymer composition has a selected ethylene content and a selected xylene soluble content. In accordance with the present disclosure, the crystallizability of the propylene polymer matrix is considered to attain the predetermined reduced level when an analytical temperature rising elution fractionation, ATREF, peak temperature (T3) of the heterophasic propylene copolymer composition is lower than or equal to 117.0°C.

The Applicant has also surprisingly found that a convenient reduction of crystallizability resulting in the above-mentioned combination of properties may be obtained by using a selected low amount of external donor (*i.e.,* a low Si/Ti ratio, i.e., lower than 12) in the process for producing the composition, and also that the lower the amount of comonomer in the propylene polymer matrix, the lower is the Si/Ti ratio (e.g., lower than 3 if no comonomer is present in the propylene polymer matrix) to be used to achieve the same beneficial combination of properties described above, with the proviso that, when a comonomer is present in the propylene polymer matrix, the propylene polymer matrix comprises less than 0.5 wt% of comonomer based on the total weight of the propylene polymer matrix.

The unique combination of properties of the heterophasic propylene copolymer composition herein disclosed, including improved sealing behavior and cold temperature impact resistance as well as nonlinear rheological behavior in combination with a high melting point and stiffness may be for example desirable in film applications. Such film applications include, among others, the production of pouches, lids, bags, sachets, and labels. In these applications, higher seal strengths even at low sealing temperatures (for example expressed in terms of seal strength Fmax, *i.e.*, the maximum force required to break the seal in accordance with ASTM F 88-05), a higher sealing performance index (expressed for example as a combination of seal strength Fmax at 145°C and 165°C), and/or a higher film tensile performance index (as defined in the Detailed Examples) may be obtained.

According to an aspect thereof, one or more embodiments of the present disclosure relate to a heterophasic propylene copolymer composition comprising: (a) from 74 to 93 wt% of a propylene polymer matrix and (b) from 7 to 26 wt% of a propylene ethylene copolymer dispersed in the propylene polymer matrix. The propylene polymer matrix may comprise either a propylene homopolymer or a propylene copolymer comprising less than 0.5 wt% of a comonomer based on the total weight of the propylene polymer matrix. The heterophasic propylene copolymer composition may have an analytical temperature rising elution fractionation, ATREF, peak temperature (T3) lower than or equal to 117.0°C, the ATREF peak temperature (T3) being determined by a CRYSTAF-TREF instrument. The heterophasic propylene copolymer composition may comprise an ethylene content in the range of from 4.0 to 17 wt% based on the total weight of the heterophasic propylene copolymer composition, the ethylene content being determined by Fourier Transform Infrared (FTIR) spectroscopy. The heterophasic propylene copolymer composition may have a xylene soluble content, XS, in a range of from 9 to 22 wt%, as determined according to ISO 16152:2022.

According to a further aspect thereof, one or more embodiments of the present disclosure relate to a process for producing a heterophasic propylene copolymer composition. The process may comprise polymerizing propylene and optionally a comonomer to produce either a propylene homopolymer or a propylene copolymer comprising less than 0.5 wt% of comonomer, based on the total weight of the propylene polymer matrix, in a first polymerization stage in the presence of: a Ziegler-Natta catalyst comprising a titanium component, Ti, and an internal donor selected from the group comprising phthalates, diethers, and diesters; and an external donor, Si, comprising an organosilane used at a predetermined Si/Ti molar ratio. The process may further comprise transferring the propylene polymer matrix to a second polymerization stage arranged in series with the first polymerization stage. The process may further comprise polymerizing propylene and ethylene in the second polymerization stage to obtain a heterophasic propylene copolymer composition. When the propylene polymer matrix comprises 0 wt% of comonomer, the predetermined Si/Ti molar ratio may be < 3, and when the propylene polymer matrix comprises from more than 0 to less than 0.5 wt% of comonomer based on the total weight of the propylene polymer matrix, the predetermined Si/Ti molar ratio may be < 12.

According to a further aspect thereof, one or more embodiments of the present disclosure relate to a use of a heterophasic propylene copolymer composition as defined in any of the embodiments disclosed herein for producing a film having a Sealing Performance Index of at least 35, wherein the Sealing Performance Index is defined by the following equation:

$$Sealing\ Performance\ Index = \left( F_{max}\ (at\ 145°C) \left[ \frac{N}{15mm} \right] + F_{max}\ (at\ 165°C) \left[ \frac{N}{15mm} \right] \right) /$$

$\left[ \frac{N}{15mm} \right]$. $F_{max}$ is the maximum force required to break the seal in accordance with ASTM F 88-05.

According to a further aspect thereof, one or more embodiments of the present disclosure relate to an article comprising the heterophasic propylene copolymer composition as defined in any of the embodiments disclosed herein, wherein the article is selected from the group comprising films, pouches, lids, bags, sachets, and labels.

Further embodiments are defined in the dependent claims.

Brief description of the drawings

Figure 1 shows heat seal properties of cast films comprising heterophasic propylene compositions according to embodiments of the present disclosure and comparative examples containing nucleating agents.

Figure 2 shows heat seal properties of cast films comprising heterophasic propylene compositions according to an embodiment of the present disclosure and a comparative example free from nucleating agents.

Figure 3 shows the sealing performance index of the cast films of Figs. 1 and 2.

Figure 4 shows the film tensile performance index of the cast films of Figs. 1 and 2

Description of embodiments

One or more embodiments provide a heterophasic propylene copolymer composition comprising: (a) from 74 to 93 wt% of a propylene polymer matrix and (b) from 7 to 26 wt% of a propylene ethylene copolymer dispersed in the propylene polymer matrix. The propylene polymer matrix comprises either a propylene homopolymer or a propylene copolymer comprising less than 0.5 wt% of a comonomer based on the total weight of the propylene polymer matrix. The heterophasic propylene copolymer composition has an analytical temperature rising elution fractionation, ATREF, peak temperature (T3) lower than or equal to 117.0°C, the ATREF peak temperature (T3) being determined by a CRYSTAF-TREF instrument. The heterophasic propylene copolymer composition comprises an ethylene content in the range of from 4.0 to 17 wt% based on the total weight of the heterophasic propylene copolymer composition, the ethylene content being determined by Fourier Transform Infrared (FTIR) spectroscopy. The heterophasic propylene copolymer composition has a xylene soluble content (XS) in a range of from 9 to 22 wt%, as determined according to ISO 16152:2022.

As used herein, "propylene polymer matrix" refers to a polymer matrix containing more than 99.5 wt% of propylene monomer.

According to one or more embodiments, the propylene polymer of the propylene polymer matrix is selected from the group comprising propylene homopolymer and copolymers of propylene and one or more comonomers. In the former case, the propylene polymer matrix comprises 0 wt% of comonomer. Correspondingly, according to one or more embodiments, the heterophasic propylene copolymer composition may have an analytical temperature rising elution fractionation, ATREF, peak temperature (T3) from 111 to 117.0°C. In the latter case, the amount of one or more comonomers in the propylene polymer matrix is less than 0.5 wt%, such as, for example, at most 0.45 wt%, 0.40 wt%, 0.30 wt%, or 0.25 wt%, based on the total weight of the propylene polymer matrix. According to one or more embodiments, the propylene polymer matrix comprises from 0.05 to less than 0.5 wt%, from 0.1 to 0.45 wt%, or from 0.15 to 0.40 wt% of one or more comonomers based on the total weight of the propylene polymer matrix. Correspondingly, according to one or more embodiments, the heterophasic propylene copolymer composition may have an analytical temperature rising elution fractionation, ATREF, peak temperature (T3) from 111 to 117.0°C, from 112 to 116°C, or from 113 to 115.5°C, respectively.

According to one or more embodiments, the comonomers that may be used to form the propylene copolymer of the propylene polymer matrix may include one or more alpha-olefins.

According to one or more embodiments, the comonomers may include ethylene and/or a C4 to C20 alpha-olefin, such as 1-butene, 3-methyl-1-butene, 4-methyl-1-pentene, 3-methyl-1-pentene, 1-heptene, 1-hexene, 1-octene, 1-decene, 1-dodecene, and styrene, among others, including their halogenated counterparts, as well as conjugated or non-conjugated, straight chain, branched, or cyclic C4 to C20 dienes, such as butadiene, norbornene, pentadienes or cyclopentadienes, and 1,4-hexadiene, 1,6-octadiene, 1,7-octadiene, 1,9-decadiene, 5-methyl-1,4-hexadiene, 3,7-dimethyl-1,6-octadiene, and 3,7-dimethyl-1,7-octadiene, among others.

According to one or more embodiments, the comonomer that may be used to form the propylene copolymer of the propylene polymer matrix is ethylene.

According to one or more embodiments, the propylene ethylene copolymer dispersed in the propylene polymer matrix comprises from 30 to 65 wt% of ethylene based on the total weight of the propylene ethylene copolymer.

According to one or more embodiments, the propylene ethylene copolymer dispersed in the propylene polymer matrix comprises from 40 to 50 wt%, from 42 to 48 wt%, or from 43 to 47 wt% of ethylene based on the total weight of the propylene ethylene copolymer.

According to one or more embodiments, the heterophasic propylene copolymer composition has an MFR in a range of from 0.5 to 12 g/10 min, as determined according to ISO 1133, 230°C, 2.16 kg.

According to one or more embodiments, the heterophasic propylene copolymer composition has a MFR in a range of from 0.6 to 10 g/10 min, from 0.7 to 8.0 g/10 min, from 0.8 to 5.0 g/10 min, or from 1.0 to 3.5 g/10 min, as determined according to ISO 1133, 230°C, 2.16 kg.

According to one or more embodiments, the heterophasic propylene copolymer composition has an intrinsic viscosity (IV) ratio between the intrinsic viscosity of the soluble fraction (SolF) and the intrinsic viscosity of the crystalline fraction (CrF) in a range of from 0.7 to 1.5, as determined by CRYSTEX QC.

According to one or more embodiments, the heterophasic propylene copolymer composition has a melting point, $T_M$, in a range of from 158 to 168°C, as determined according to ISO 11357-3.

According to one or more embodiments, the heterophasic propylene copolymer composition has a melting point, $T_M$, in a range of from 159 to 167°C, from 160 to 166°C, from 161 to 165.5°C, or from 162 to 165°C, as determined according to ISO 11357-3.

According to one or more embodiments, the heterophasic propylene copolymer composition has a rheological nonlinearity parameter (NLP) in the range of from 2.0 to 10.0, from 2.5 to 8.0, from 3.0 to 6.0, or from 3.5 to 5.5.

According to one or more embodiments, the heterophasic propylene copolymer composition has a Charpy Notched Impact Resistance at -20 °C in the range of from 3.0 to 15 kJ/m$^2$, from 4.0 to 12 kJ/m$^2$, from 4.5 to 10 kJ/m$^2$, or from 5.0 to 8.0 kJ/m$^2$.

According to one or more embodiments, the heterophasic propylene copolymer composition may comprise from 74 to 92 wt%, from 79 to 91 wt%, from 81 to 90 wt%, from 82 to 89 wt%, or from 83 to 88 wt% of a propylene polymer matrix, and respective percentages of propylene ethylene copolymer to sum up to 100 wt%.

According to one or more embodiments, the total amount of the propylene polymer matrix and propylene ethylene copolymer is in a range from 90 to 100 wt% based on the total weight of the heterophasic propylene copolymer composition, wherein the heterophasic propylene copolymer composition further comprises from 0 to 10 wt% of at least one additive, based on the total weight of the heterophasic propylene copolymer composition.

According to one or more embodiments, the total amount of the propylene polymer matrix and propylene ethylene copolymer is in a range from 95 to 100 wt%, or from 97 to 100 wt%, of 100 wt%, based on the total weight of the heterophasic propylene copolymer composition. The heterophasic propylene copolymer composition further comprises from 0 to 5 wt%, or from 0 to 3 wt%, respectively, of at least one additive, based on the total weight of the heterophasic propylene copolymer composition.

According to one or more embodiments, the heterophasic propylene copolymer composition may comprise from 74 to 92 wt%, from 79 to 91 wt%, from 81 to 90 wt%, from 82 to 89 wt%, or from 83 to 88 wt% of a propylene polymer matrix, and from 7 to 25 wt%, from 8 to 20 wt%, from 9 to 18 wt%, from 10 to 17 wt%, or from 11 to 16 wt%, respectively, of a propylene ethylene copolymer dispersed in the propylene polymer matrix. In this case, the heterophasic propylene copolymer composition may further comprise up to 1% of at least one additive.

According to one or more embodiments, the at least one additive is selected from the group comprising antioxidants, acid scavengers, antistatic agents, nucleating agents, slip agents, antiblocking agents, and combinations thereof.

According to one or more embodiments, the at least one additive comprises one or more antioxidants selected from the group comprising propionate-based phenolic antioxidants, amine antioxidants, phosphite antioxidants, phosphonite antioxidants, benzofuranone antioxidants, thiodipropionate antioxidants, acryloyl antioxidants and combinations thereof, such as propionate-based phenolic antioxidants and phosphite antioxidants, for example pentaerythritol tetrakis [3-[3,5-di-tert-butyl-4-hydroxyphenyl] propionate and tris(2,4-di-tert-butylphenyl)phosphite, and combinations thereof.

According to one or more embodiments, the at least one additive comprises one or more acid scavengers selected from the group comprising metallic stearates, hydrotalcites, hydrocalumites, metallic oxides, metallic carbonates and combinations thereof, for example selected from metallic stearates, particularly calcium stearate, and combinations thereof.

According to one or more embodiments, the at least one additive comprises one or more antistatic agents selected from the group comprising glycerol monostearates (such as, for example, GMS-55, GMS-90), ethoxylated alkyl amines, and combinations thereof.

According to one or more embodiments, the at least one additive comprises one or more nucleating agents selected from the group comprising talc, sodium benzoate, 1,2,3-tridesoxy-4,6:5,7-bis-O-[(4-propylphenyl) methylene] nonitol, 1,3:2,4-bis(3,4-dimethyl-benzylidene) sorbitol, 1,2-cyclohexane dicarboxylic acid metal salts, bicyclo [2.2.1] heptane- 2,3-dicarboxylic acid metal salts, 2,2'-methylene-bis-(4,6-di-te/t-butylphenyl) phosphate metal salts, 2,2'-methylene-bis-(4,6-di-te/t-butylphenyl) benzoate metal salts, hydroxy-bis(2,2'-methylene-bis(4,6-di-tert-butylphenyl) phosphate metal salts, wherein the metal ions may be for example selected from, lithium, aluminium, sodium, calcium, magnesium, and combinations thereof.

According to one or more embodiments, the at least one additive comprises one or more slip agents selected from the group comprising erucamides, oleamides, and combinations thereof.

According to one or more embodiments, the at least one additive comprises one or more antiblocking agents selected from the group comprising silica, poly(methyl methacrylate), and combinations thereof.

According to one or more embodiments, the at least one additive comprises one or more additives summing up to an amount in the range from 0 to 10000 ppm, from 0 to 7000 ppm, from 0 to 6000 ppm, or from 0 to 5000 ppm based on the total weight of the heterophasic propylene copolymer composition.

According to one or more embodiments, the at least one additive comprises one or more additives summing up to an amount in the range from 500 to 10000 ppm, from 1000 to 7000 ppm, from 1300 to 6000 ppm, or from 1500 to 5000 ppm based on the total weight of the heterophasic propylene copolymer composition.

According to one or more embodiments, the heterophasic propylene polymer composition comprises an ethylene content in the range of from 6.0 to 15 wt%, from 7.0 to 13 wt%, from 7.1 to 12 wt%, or from 7.2 to 11 wt%, as determined by Fourier Transform Infrared (FTIR) spectroscopy.

According to one or more embodiments, the heterophasic propylene copolymer composition may have a xylene soluble content, XS, in a range of from 10 to 22 wt%, from 11 to 20 wt%, from 12 to 19 wt%, or from 13 to 18 wt%, as determined according to ISO 16152:2022.

According to one or more embodiments, the heterophasic propylene copolymer composition may have a IV ratio (SolF/CrF) in the range of from 0.7 to 2.0, from 0.8 to 1.8, from 0.9 to 1.5, or from 1.0 to 1.3.

According to one or more embodiments, the heterophasic propylene polymer composition may be produced by any one of the embodiments of the process described herein.

One or more embodiments provide a process for producing a heterophasic propylene copolymer composition. The process comprises polymerizing propylene and optionally a comonomer to produce either a propylene homopolymer or a propylene copolymer comprising less than 0.5 wt% of comonomer, based on the total weight of the propylene polymer matrix, in a first polymerization stage in the presence of: a Ziegler-Natta catalyst comprising a titanium component, Ti, and an internal donor selected from the group comprising phthalates, diethers, and diesters; and an external donor, Si, comprising an organosilane used at a predetermined Si/Ti molar ratio. The process further comprises transferring the propylene polymer matrix to a second polymerization stage arranged in series with the first polymerization stage. The process further comprises polymerizing propylene and ethylene in the second polymerization stage to obtain a heterophasic propylene copolymer composition. When the propylene polymer matrix comprises 0 wt% of comonomer, the predetermined Si/Ti molar ratio is < 3, and when the propylene polymer matrix comprises from more than 0 to less than 0.5 wt% of comonomer based on the total weight of the propylene polymer matrix, the predetermined Si/Ti molar ratio is < 12.

According to one or more embodiments, the process is performed in a gas-phase two-reactor cascade, such as a vertically-stirred gas-phase two-reactor cascade, for example of the Novolen® type.

According to one or more embodiments, the process comprises polymerizing propylene and one or more comonomers.

According to one or more embodiments, the one or more comonomers, when present, may be any of the comonomer(s) described with reference to any one of the embodiments of the heterophasic propylene copolymer composition.

According to one or more embodiments, the comonomer(s) may be present in the same amounts described with reference to any one of the embodiments of the heterophasic propylene copolymer composition.

According to one or more embodiments, the Ziegler-Natta catalyst comprises a $MgCl_2$-xROH-supported Ziegler-Natta catalyst.

According to one or more embodiments, the Ziegler-Natta catalyst may be used in combination with a co-catalyst, such as, for example, triethylaluminium (TEAl).

According to one or more embodiments, the internal donor (ID) comprises a phthalate, e.g., a diisobutyl phthalate (DIBP), dibutyl phthalate (DNBP), or diisooctyl phthalate (DIOP).

According to one or more embodiments, the internal donor (ID) comprises a diether, e.g., a 2-isopropyl-2-isopentyl-1,3 dimethoxypropane, 2-isopropyl-2-cyclopentyl dimethoxypropane, or 9,9-bis(methoxymethyl)fluorene.

According to one or more embodiments, the internal donor (ID) comprises a diester, e.g., a 3-methyl-5-tert-butyl-1,2-phenylene dibenzoate, 3-di-tert-butyl-5-tert-butyl-1,2-phenylene dibenzoate, or 3,5-diisopropyl-1,2-phenylene dibenzoate.

According to one or more embodiments, the ID/Mg ratio is of from 0.03 to 0.40, from 0.05 to 0.30, from 0.10 to 0.19, or from 0.11 to 0.14.

According to one or more embodiments, the external donor (Si) comprises isobutyl(isopropyl) dimethoxysilane, cyclohexylmethyl-dimethoxysilane, or dicyclopentyl-dimethoxysilane.

According to one or more embodiments, the propylene polymer matrix comprises 0 wt% of comonomer and the Si/Ti molar ratio is for example from 0.5 to 2.9, from 0.5 to 2.5, from 1.0 to 2.3, or from 1.3 to 1.9.

According to one or more embodiments, the corresponding heterophasic propylene copolymer composition obtained by these embodiments of the process comprises 0 wt% of comonomer and has an analytical temperature rising elution fractionation, ATREF, peak temperature (T3) lower than or equal to 117.0°C when the Si/Ti molar ratio is lower than 3, from 111 to 117°C when the Si/Ti molar ratio is from 0.5 to 2.5, from 113 to 116.5°C when the Si/Ti molar ratio is from 1.0 to 2.3, and from 114 to 116°C when the Si/Ti molar ratio is from 1.3 to 1.9, the ATREF peak temperature (T3) being determined by a CRYSTAF-TREF instrument.

According to one or more embodiments, the propylene polymer matrix comprises from 0.05 to less than 0.5 wt% of comonomer based on the total weight of the propylene polymer matrix and the Si/Ti molar ratio is for example from 3 to less than 12, from 4 to 10, or from 5 to 7.

According to one or more embodiments, the propylene polymer matrix comprises from 0.1 to 0.45 wt% of comonomer based on the total weight of the propylene polymer matrix and the Si/Ti molar ratio is from 3 to less than 12.

According to one or more embodiments, the propylene polymer matrix comprises from 0.15 to 0.40 wt% of comonomer based on the total weight of the propylene polymer matrix and the Si/Ti molar ratio is from 4 to 10.

According to one or more embodiments, the propylene polymer matrix comprises from 0.15 to 0.40 wt% of comonomer based on the total weight of the propylene polymer matrix and the Si/Ti molar ratio is from 5 to 7.

According to one or more embodiments, the corresponding heterophasic propylene copolymer composition obtained by these embodiments of the process has an analytical temperature rising elution fractionation, ATREF, peak temperature (T3) lower than or equal to 117.0°C when the propylene polymer matrix comprises from more than 0 to less than 0.5 wt% of comonomer and the Si/Ti molar ratio is equal to or higher than 3 and lower than 12, from 111 to 117°C when the propylene polymer matrix comprises from 0.05 to less than 0.5 wt% of comonomer and the Si/Ti molar ratio is from 3 to less than 12, from 112 to 116°C when the propylene polymer matrix comprises from 0.1 to 0.45 wt% of comonomer the Si/Ti molar ratio is from 4 to 10, and from 113 to 115.5°C when the propylene polymer matrix comprises from 0.15 to 0.40 wt% of comonomer the Si/Ti molar ratio is from 5 to 7, the ATREF peak temperature (T3) being determined by a CRYSTAF-TREF instrument.

According to one or more embodiments, the process further comprises adjusting a feed rate of propylene and a feed rate of any comonomer when present until a propylene polymer matrix having an analytical temperature rising elution fractionation, ATREF, peak temperature (T3) lower than or equal to 117°C or any of the exemplary values disclosed herein is obtained, the ATREF peak temperature (T3) being determined by a CRYSTAF-TREF instrument.

According to one or more embodiments, the process comprises polymerizing propylene and optionally a comonomer in the first polymerization stage also in the presence of hydrogen.

According to one or more embodiments, the process further comprises quenching the reaction in the second polymerization stage by using a quenching agent, e.g., isopropanol.

According to one or more embodiments, the process further comprises processing the heterophasic propylene copolymer composition obtained in powder form following the two-stage polymerization in a twin-screw extruder in the presence of additives.

According to one or more embodiments, the additives may be for example selected from the group comprising antioxidants, acid scavengers, antistatic agents, nucleating agents, slip agents, and antiblocking agents.

According to one or more embodiments, the process further comprises mixing the heterophasic propylene copolymer composition under melt conditions with at least one organic peroxide.

According to one or more embodiments, the organic peroxide is selected from the group comprising 2,5-dimethyl-2,5-di(tert-butylperoxy) hexane, 3,6,9-triethyl-3,6,9-trimethyl-1,4,7-triperoxonane, di-tert-butyl peroxide, such as 2,5-dimethyl-2,5-di(tert-butylperoxy) hexane.

One or more embodiments provide a use of a heterophasic propylene copolymer composition as defined in any of the embodiments described herein for producing a film having a Sealing Performance Index of at least 35, wherein the Sealing Performance Index is defined by the following equation:

$$Sealing\ Performance\ Index = \left(F_{max}\ (at\ 145°C)\left[\frac{N}{15mm}\right] + F_{max}\ (at\ 165°C)\left[\frac{N}{15mm}\right]\right)/$$

$$\left[\frac{N}{15mm}\right],$$

wherein $F_{max}$ is the maximum force required to break the seal in accordance with ASTM F 88-05.

One or more embodiments provide an article comprising the heterophasic propylene copolymer composition as defined in any of the embodiments described herein, wherein the article is selected from the group comprising films, pouches, lids, bags, sachets, and labels.

Detailed examples

The following examples of heterophasic propylene copolymer compositions and processes for producing the same are given for illustrating but not limiting purposes.

The examples show the improved sealing behavior, cold temperature impact resistance, and nonlinear rheological behavior of heterophasic propylene copolymer compositions in accordance with the present disclosure compared to conventional heterophasic propylene copolymer compositions.

The following methods were used to determine the properties reported in the examples and in any of the embodiments of the present disclosure referring to these properties.

Melt flow rates MFR [g/10 min] were determined according to ISO 1133 at 230°C and a load of 2.16 kg using a MeltFlow @on (Emmeram Karg Industrietechnik, Germany).

Peak melting temperatures $T_M$ [°C] and peak crystallization temperatures Tc [°C] were determined according to ISO 11357-3 using a DSC822e (Mettler Toledo, Switzerland). The heating and cooling protocol was as follows: [1] 50 to 200°C at +10 K/min, [2] 200°C for 5 min, [3] 200 to 50°C, at -10 K/min, [4] 50°C for 5 min, [5] 50 to 200°C at +10 K/min. For the peak melting temperature $T_M$, the second heating cycle was evaluated.

Multipurpose test specimen (type A1) for physical testing were prepared according to ISO 19069-2 and ISO 20753. The test specimen were conditioned for 7 days at 23°C and 50% relative humidity prior to testing. Charpy notched impact resistance values at -20°C were determined according to ISO 179-1/1eA on notched test specimen.

"C2 content" designates the fraction in wt% of -CH$_2$-CH$_2$- units in the polymers derived from the polymerization of ethylene. Ethylene (C2) contents were determined by Fourier Transform Infrared (FTIR) spectroscopy on $200 \pm 50$ μm films using a Tensor 27 FTIR spectrometer (Bruker Corp., USA). The films were prepared using a hot press at 200°C and 50 bar, and the spectral absorption was corrected for actual film thickness. The FTIR spectra were acquired in the mid infrared region of 4000 - 400 cm$^{-1}$ and the bands between 900 - 600 cm$^{-1}$ were evaluated using a partial least-squares (PLS) algorithm in comparison to spectra of reference samples that were calibrated by $^{13}$C NMR (Haaland et al., Anal. Chem. 1988, 60, 1193-1202).

Analytical temperature rising elution fractionation (ATREF) was performed using an automated CRYSTAF-TREF instrument (PolymerChar, Spain), equipped with a heated infrared (IR) concentration detector with composition sensor, and a capillary viscometer detector. Polymer solutions were prepared at a concentration of $3 \pm 0.25$ mg/ml in 1,2-dichlorobenzene (stabilized with 500 ppm 2,6-di-tert-butyl-4-methylphenol) at 150° C for 90 minutes. After dissolution was completed, the sample was transferred to the ATREF column where stabilization, crystallization, and elution cycles were performed as follows. During stabilization, the column was cooled down from 150°C to 95°C. at -40°C/min and then kept at 95°C for 45 min. The crystallization was carried out by cooling down from 95°C to 35° C at a cooling rate of -0.5°C/min. At the end of the crystallization, the column was kept at 35°C for 10 minutes. Subsequently, the content of the column was eluted for 10 minutes to collect the soluble fraction. The elution was carried out by heating from 35°C to 140°C at a heating rate of + 1 °C/min, while maintaining a constant solvent flow rate of 0.5 ml/min. The obtained ATREF curve was normalized to 100% integral including the soluble fraction. The peak maximum temperature T3 was assigned to the observed maximum in the temperature range from 100°C to 150°C.

Separation into soluble and crystalline fractions with subsequent analysis was performed using a CRYSTEX QC instrument (PolymerChar, Spain). 800 mg of polymer were dissolved in 100 ml of 1,2-dichlorobenzene (ODCB) at 165°C with stirring of 800 rpm until complete dissolution was achieved (after 60 min). The solution was injected into the CRYSTEX column, cooled to 40°C, and kept at that temperature for 30 min to enable complete separation between the soluble and crystalline fraction. Aliquots of the soluble fraction were eluted to detectors for determining concentration c(SolF), intrinsic viscosity IV(SolF), and ethylene content C2(SolF). Upon analysis of the soluble fraction, the column temperature was raised to 160°C for redissolution of the crystalline fraction. Aliquots of the crystalline fraction were eluted to detectors for determining concentration c(CrF), intrinsic viscosity IV(CrF), and ethylene content C2(CrF). The xylene soluble (XS) content was determined based on the relative amount of soluble fraction according to ISO 16152:2022 (Method 2: Automated instrumental method) with calibration against ISO 16152:2022 (Method 1: Reference method). The ratio between the intrinsic viscosities of the soluble and crystalline fractions was calculated according to the following equation:

$$IV\ Ratio\ (SolF/CrF) = \frac{IV\ (SolF)}{IV\ (CrF)}$$

For the determination of nonlinear rheological behavior, rheological oscillatory strain sweep experiments were performed on compression-molded disks using a parallel-plate geometry at 210°C, oscillatory strain amplitude $\gamma_0$ = 0.1% to 100%, angular frequency $\omega$ = 10 rad/s, and a DHR-2 rheometer (TA Instruments, New Castle, USA). The obtained data was analyzed with the FT rheology framework as described by Wilhelm, M., Macromolecular materials and engineering 287.2 (2002): 83-105 and Hyun, Kyu, et al. Progress in polymer science 36.12 (2011): 1697-1753. The nonlinearity ratio I3/1 of the intensity of the third harmonic divided by the intensity of the first harmonic was employed to calculate the rheological nonlinearity parameter (NLP) as defined by the following equation:

$$NLP\ =\ 1000\ \times I_{3/1}\ at\ \gamma_0 = 70\%$$

For the evaluation of film properties, cast films of 10 cm width and 70 $\mu$m thickness were extruded on a Measuring Extruder ME 20/26 (Optical Control Systems, Germany) equipped with a three-zone screw (D = 20 mm) and a chill roll and winding system CR 7 (Optical Control Systems, Germany). The chill roll temperature was maintained at 34°C.

For the evaluation of heat seal properties according to ASTM F 88-05, the cast films were conditioned for 24h at 23°C and 50% relative humidity. The conditioned cast films were sealed perpendicular to the machine direction (MD) of the films using a SGPE 20 sealer (Kopp Verpackungssysteme, Germany) at temperatures of 125, 135, 145, 155, 165, and 175°C using two hot bars (smooth surfaces, 10 cm$^2$ sealing area), a sealing time of 0.5 s, and a sealing pressure of 1 N/mm$^2$. The sealed cast film samples were conditioned for 48 h at 23°C and 50% relative humidity prior to testing. Heat seal strengths were determined on 15 mm wide strips of the sealed cast films using a tensile tester. Testing was carried out in machine direction (MD) of the films, at a velocity of 100 mm/min, and at an angle of 90°. The maximum force required to break the seal was determined. The average from measurements on five different samples was reported as Fmax [N/15mm].

For the evaluation of film tensile properties, 15 mm wide strips of the prepared cast films were tested using a tensile tester. Testing was carried out according to ISO 527 in machine direction (MD) of the films and using a velocity of 500 mm/min.

EXAMPLES

Example IE-1

Example IE-1 was prepared by synthesizing a heterophasic propylene copolymer composition comprising a propylene polymer matrix and a propylene ethylene copolymer in a vertically-stirred gas phase two-reactor cascade (Novolen® type) using a stereospecific MgCl$_2$-xROH-supported Ziegler-Natta catalyst containing diisobutyl phthalate (DIBP) as internal donor (ID) with an ID/Mg ratio of about 0.13. To produce the propylene polymer matrix, the catalyst, a co-catalyst (TEAI), isobutyl(isopropyl) dimethoxysilane as external donor (Si/Ti molar ratio of about 6), propylene, ethylene, and hydrogen were fed to a first reactor of the two-reactor cascade. The first reactor was maintained at about 80°C and 30 barg. The feed rates of propylene, ethylene, and hydrogen were adjusted until a propylene polymer matrix having an MFR (230°C, 2.16 kg) of about 1.3 g/10 min, an ATREF T3 of about 115.5°C, and an ethylene (C2) content of about 0.2 wt% was obtained. The polymer was then transferred to a second reactor of the two-reactor cascade and propylene and ethylene were fed to the second reactor to polymerize an ethylene propylene copolymer. The second reactor was maintained at about 70°C and 16 barg. The feed rates of ethylene and propylene were adjusted to obtain an ethylene propylene copolymer with an ethylene (C2) content of about 45 wt%. Isopropanol was fed to the second reactor to quench the reaction, and the feed rate thereof was adjusted to obtain a heterophasic propylene copolymer with an ethylene propylene copolymer content of about 17wt% and an MFR (230°C, 2.16kg) of about 1 g/10 min. The obtained polymer powder was extruded on a twin-screw extruder with about 450 ppm pentaerythritol tetrakis[3-[3,5-di-tert-butyl-4-hydroxyphenyl] propionate, 900 ppm tris(2,4-di-tert-butylphenyl)phosphite, 450 ppm calcium stearate, 300 ppm nucleating agent HPN-20E (Milliken, USA). Peroxide (2,5-dimethyl-2,5-di(tert-butylperoxy) hexane) was fed to the extruder to visbreak the obtained powder to a final MFR of about 2.4 g/10 min.

Example IE-2

Example IE-2 was prepared by extruding the heterophasic propylene copolymer powder described in Example IE-1 on a twin-screw extruder with about 450 ppm pentaerythritol tetrakis[3-[3,5-di-tert-butyl-4-hydroxyphenyl] propionate, 900 ppm tris(2,4-di-tert-butylphenyl)phosphite, 450 ppm calcium stearate, 2000 ppm nucleating agent Millad 3988 (Milliken, USA). Peroxide (2,5-dimethyl-2,5-di(tert-butylperoxy) hexane) was fed to the extruder to visbreak the obtained polymer powder to a final MFR of about 3.4 g/10 min.

Example IE-3

Example IE-3 was prepared by extruding the heterophasic propylene copolymer powder described in Example IE-1 on a twin-screw extruder with about 450 ppm pentaerythritol tetrakis[3-[3,5-di-tert-butyl-4-hydroxyphenyl] propionate, 900 ppm tris(2,4-di-tert-butylphenyl)phosphite, 450 ppm calcium stearate, 2000 ppm nucleating agent Millad 3988 (Milliken, USA). The polymer was not subjected to visbreaking with a peroxide.

Example IE-4

Example IE-4 was prepared by extruding the heterophasic propylene copolymer powder described in Example IE-1 on a twin-screw extruder with about 450 ppm pentaerythritol tetrakis[3-[3,5-di-tert-butyl-4-hydroxyphenyl] propionate, 900 ppm tris(2,4-di-tert-butylphenyl)phosphite, 450 ppm calcium stearate. The polymer was not subjected to visbreaking with a peroxide.

Comparative Example CE-1

Comparative Example CE-1 was the commercial heterophasic propylene copolymer PPC 2660 available from Total Energies (Feluy, Belgium), free from a nucleating agent and showing a Tc of 118°C. The copolymer of CE-1 corresponds to comparative example CE3 of EP 3 650 494 A2.

Comparative Example CE-2

Comparative Example CE-2 was the commercial heterophasic propylene copolymer 83MF10 available from Sabic (Geleen, The Netherlands), containing about 4000 ppm of talc as a nucleating agent and showing a Tc of 124°C. The copolymer of Comparative Example CE-2 of the present application has a composition similar to the composition of Example HECO 1 of EP 3 650 494 A2, except for a higher ethylene content of 13.5 wt%.

Comparative Example CE-3

Comparative Example CE-3 was prepared by synthesizing a heterophasic propylene copolymer composition in a vertically-stirred gas phase two-reactor cascade (Novolen® type) using a stereospecific $MgCl_2$-xROH-supported Ziegler-Natta catalyst containing diisobutyl phthalate (DIBP) as internal donor (ID) with an ID/Mg ratio of about 0.13. To produce the propylene polymer matrix, the catalyst, a co-catalyst (TEAI), isobutyl(isopropyl) dimethoxysilane as external donor (Si/Ti molar ratio of about 12), propylene, and hydrogen were fed to a first reactor of the two-reactor cascade. A first reactor of the two-reactor cascade was maintained at about 80°C and 30 barg. The feed rates of propylene and hydrogen were adjusted until a polymer having an MFR (230°C, 2.16 kg) of about 1.5 g/10 min and ATREF T3 of about 119°C was obtained. The polymer was then transferred to a second reactor of the two-reactor cascade and propylene and ethylene were fed to the second reactor to polymerize an ethylene propylene copolymer. A second reactor of the two-reactor cascade was maintained at about 70°C and 16 barg. The feed rates of ethylene (C2) and propylene (C3) were adjusted to obtain an ethylene propylene copolymer with an ethylene (C2) content of about 65wt%. Isopropanol was fed to the second reactor to quench the reaction, and the feed rate thereof was adjusted to obtain a heterophasic propylene copolymer with an ethylene propylene copolymer content of about 14wt% and an MFR (230°C, 2.16kg) of about 1 g/10 min. The obtained powder was extruded on a twin-screw extruder with about 400 ppm pentaerythritol tetrakis[3-[3,5-di-tert-butyl-4-hydroxyphenyl] propionate, 400 ppm tris(2,4-di-tert-butylphenyl)phosphite, 900 ppm calcium stearate, 3000 ppm talc as a nucleating agent. The polymer was not subjected to visbreaking with a peroxide. The composition of Comparative Example CE-3 has a composition similar to the composition of Example HECO 1 of EP 3 650 494 A2, except for a lower ethylene content of 9.0 wt%.

In Table 1 below, structural and physical parameters of the compositions in accordance with the present disclosure and comparative examples are shown.

Table 1

|  | IE-1 | IE-2 | IE-3 | IE-4 | CE-1 | CE-2 | CE-3 |
|---|---|---|---|---|---|---|---|
| MFR 2.16 kg, 230°C [g/10 min] | 2.4 | 3.4 | 1.3 | 1.1 | 0.8 | 1.7 | 1.5 |
| C2 Content [wt%] | 7.3 | 7.5 | 7.6 | 7.8 | 8.3 | 13.5 | 9.0 |
| XS [wt%] | 17.0 | 14.6 | 15.5 | 15.7 | 14.8 | 18.7 | 12.3 |
| C2 (SolF) [wt%] | 46 | 45 | 46 | 46 | 45 | 58 | 64 |
| IV (SolF) [dg/l] | 2.3 | 2.1 | 3.0 | 3.0 | 2.8 | 4.9 | 5.8 |
| IV (CrF) [dg/l] | 1.9 | 1.9 | 2.6 | 2.7 | 3.0 | 2.4 | 2.6 |
| IV Ratio (SolF/CrF) [-] | 1.2 | 1.1 | 1.1 | 1.1 | 0.9 | 2.1 | 2.3 |
| ATREF T3 [°C] | 115.0 | 114.9 | 115.4 | 115.5 | 118.9 | 119.6 | 119.0 |
| $T_M$ [°C] | 163 | 163 | 164 | 163 | 165 | 165 | 165 |
| NLP [-] | 4.6 | 4.7 | 4.8 | 4.3 | 4.1 | 10.6 | 6.1 |
| Charpy N -20°C [kJ/m2] | 6.0 | 5.7 | 6.1 | 6.8 | 3.8 | 9.5 | 7.0 |

In accordance with the prior art, the Comparative Examples CE-1 vs. CE-3 show that a combination of low ethylene content and low intrinsic viscosity of the ethylene propylene copolymer phase leads to poor cold temperature impact resistance, whereas high ethylene content and intrinsic viscosity of the copolymer phase improve cold temperature impact resistance in conventional heterophasic propylene copolymers. However, high ethylene content and intrinsic viscosity of the copolymer phase also lead to an elevated rheological nonlinearity parameter (NLP) in conventional heterophasic propylene copolymers. Furthermore, it is known that an increase of ethylene propylene copolymer content improves cold temperature impact resistance, however at the expense of an increased rheological nonlinearity parameter (NLP), as observed for CE-2 vs. CE-3.

Surprisingly, the properties of heterophasic propylene copolymers can be improved by employing a propylene polymer matrix having a reduced crystallizability, i.e., by a low ATREF T3 value, as shown by Examples IE-1 to IE-4. The resulting heterophasic propylene copolymers have both high cold temperature impact resistance and a low rheological nonlinearity parameter (NLP).

Heat Seal Performance Testing

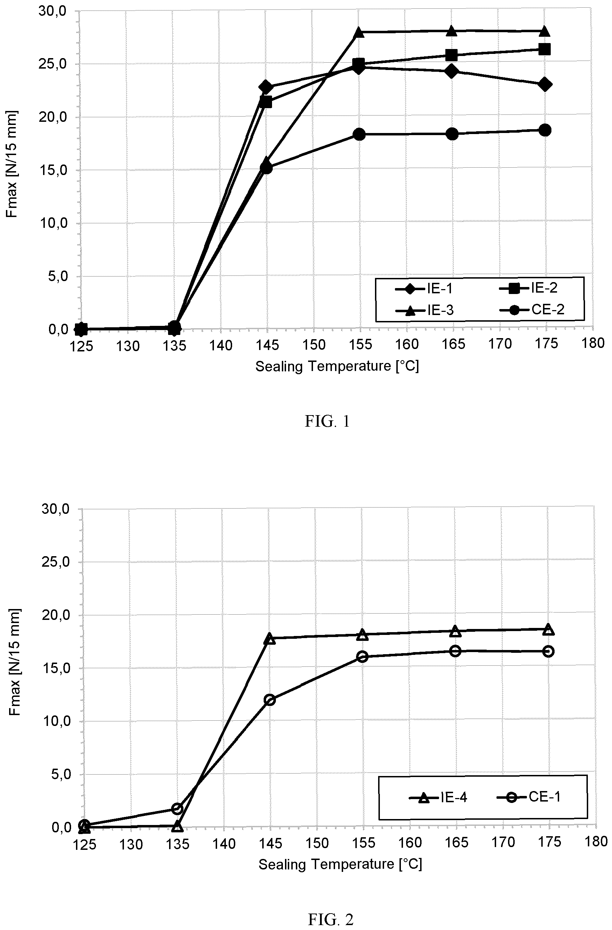

In Table 2 below as well as in Figures 1 and 2, results from heat seal tests on cast films prepared from the compositions of Examples IE-1-IE-4 and Comparative Examples CE-1 and CE-2 are shown.

Table 2

|  | IE-1 | IE-2 | IE-3 | IE-4 | CE-1 | CE-2 |
|---|---|---|---|---|---|---|
| Sealing Temperature [°C] | $F_{max}$ [N/15mm] | | | | | |
| 125 | 0.0 | 0.0 | 0.0 | 0.0 | 0.2 | 0.0 |
| 135 | 0.0 | 0.0 | 0.1 | 0.1 | 1.7 | 0.2 |
| 145 | 22.7 | 21.3 | 15.7 | 17.7 | 11.9 | 15.1 |
| 155 | 24.5 | 24.8 | 27.8 | 18.0 | 15.9 | 18.2 |
| 165 | 24.1 | 25.6 | 27.9 | 18.3 | 16.4 | 18.2 |
| 175 | 22.8 | 26.1 | 27.8 | 18.4 | 16.3 | 18.5 |
| Sealing Performance Index [-] | 46.8 | 46.9 | 43.6 | 36.0 | 28.3 | 33.3 |

Comparing the nucleated compositions of Examples IE-1, IE-2, IE-3 with the nucleated composition of Comparative Example CE-2, higher seal strengths at lower sealing temperatures are observed. The same is found when comparing the non-nucleated composition of Example IE-4 with the non-nucleated composition of Comparative Example CE-1.

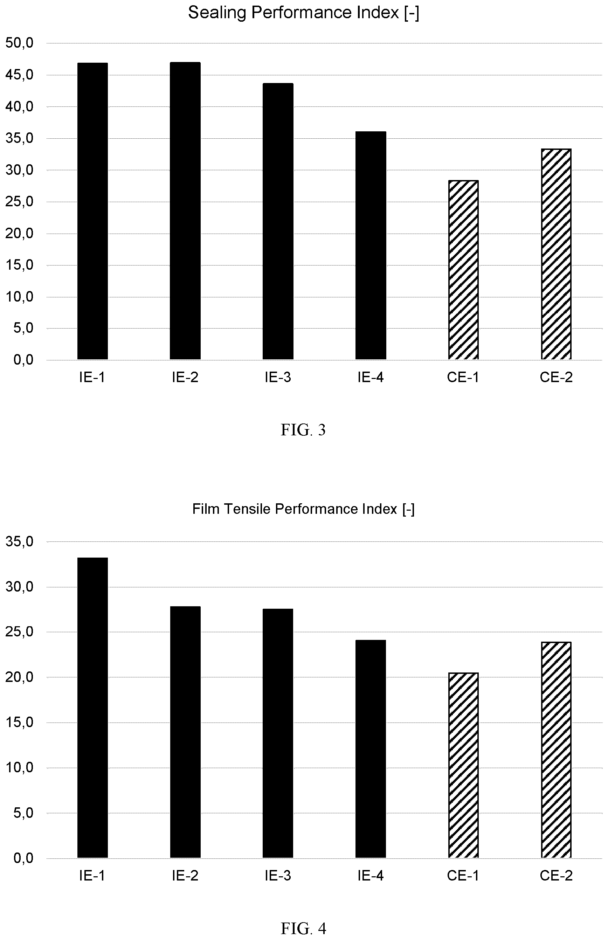

Overall, the compositions of Examples IE-1 to IE-4 show a better sealing performance than state-of-the-art compositions, as shown in Figure 3, in terms of a higher sealing performance index as defined by the following equation:

$$Sealing\ Performance\ Index = \left(F_{max}\ (at\ 145°C)\left[\frac{N}{15mm}\right] + F_{max}\ (at\ 165°C)\left[\frac{N}{15mm}\right]\right) / \left[\frac{N}{15mm}\right]$$

Film Tensile Testing

In Table 3 below as well as in Figure 4, results from tensile testing results on cast films prepared from the compositions of Examples IE-1-IE-4 and Comparative Examples CE-1-CE-2 are shown.

With respect to Comparative Examples CE-1 and CE-2, a higher film tensile performance index is observed in Examples IE-1, IE-2, IE-3, IE-4 in accordance with the present disclosure;

Table 3

|  | IE-1 | IE-2 | IE-3 | IE-4 | CE-1 | CE-2 |
|---|---|---|---|---|---|---|
| Film Tensile Stress at Yield (MD) [MPa] | 25.6 | 26.6 | 27.4 | 19.7 | 21.8 | 20.7 |
| Film Tensile Strain at Break (MD) [%] | 1296 | 1045 | 1005 | 1220 | 938 | 1152 |
| Film Tensile Performance Index [-] | 33.2 | 27.8 | 27.5 | 24.0 | 20.4 | 23.8 |

The film tensile performance index is defined by the following equation:

$$Film\ Tensile\ Performance\ Index = Film\ Tensile\ Stress\ at\ Yield\ (MD)[MPa] \times Film\ Tensile\ Strain\ at\ Break\ (MD)[\%]/(MPa \times \%)$$

While the process and the polymer compositions have been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1.   A heterophasic propylene copolymer composition comprising:

   (a) from 74 to 93 wt% of a propylene polymer matrix comprising:

   either a propylene homopolymer; or
   a propylene copolymer comprising less than 0.5 wt% of a comonomer based on the total weight of the propylene polymer matrix; and

   (b) from 7 to 26 wt% of a propylene ethylene copolymer dispersed in the propylene polymer matrix,

   wherein the heterophasic propylene copolymer composition:

   has an analytical temperature rising elution fractionation, ATREF, peak temperature (T3) lower than or equal to 117.0°C, the ATREF peak temperature (T3) being determined by a CRYSTAF-TREF instrument,
   comprises an ethylene content in the range of from 4.0 to 17 wt% based on the total weight of the heterophasic propylene copolymer composition, the ethylene content being determined by Fourier Transform Infrared, FTIR, spectroscopy, and
   has a xylene soluble content, XS, in a range of from 9 to 22 wt%, as determined according to ISO 16152:2022.

2.   The heterophasic propylene copolymer composition of claim 1, wherein the propylene polymer matrix comprises from 0.05 to less than 0.5 wt% of comonomer based on the total weight of the propylene polymer matrix.

3. The heterophasic propylene copolymer composition of claim 1 or claim 2, wherein the propylene ethylene copolymer comprises from 30 to 65 wt% of ethylene based on the total weight of the propylene ethylene copolymer.

4. The heterophasic propylene copolymer composition of any one of the preceding claims, wherein the ATREF peak temperature (T3) is in a range of from 111 to 117.0°C.

5. The heterophasic propylene copolymer composition of any one of the preceding claims, wherein the heterophasic propylene copolymer composition has a MFR in a range of from 0.5 to 12 g/10 min, as determined according to ISO 1133, 230°C, 2.16 kg.

6. The heterophasic propylene copolymer composition of any one of the preceding claims, wherein the heterophasic propylene copolymer composition has an intrinsic viscosity ratio between the intrinsic viscosity of the soluble fraction and the intrinsic viscosity of the crystalline fraction in a range of from 0.7 to 1.5, as determined by CRYSTEX QC.

7. The heterophasic propylene copolymer composition of any one of the preceding claims, wherein the heterophasic propylene copolymer composition has a melting point, $T_M$, in a range of from 158 to 168°C, as determined according to ISO 11357-3.

8. The heterophasic propylene copolymer composition of any one of the preceding claims, wherein the total amount of the propylene polymer matrix and propylene ethylene copolymer is in a range from 90 to 100 wt% based on the total weight of the heterophasic propylene copolymer composition, wherein the heterophasic propylene copolymer composition further comprises from 0 to 10 wt% of at least one additive, based on the total weight of the heterophasic propylene copolymer composition, and wherein the at least one additive is selected from the group comprising antioxidants, acid scavengers, antistatic agents, nucleating agents, slip agents, antiblocking agents, and combinations thereof.

9. Process for producing a heterophasic propylene copolymer composition, the process comprising:

polymerizing propylene and optionally a comonomer to produce either a propylene homopolymer or a propylene copolymer comprising less than 0.5 wt% of comonomer, based on the total weight of the propylene polymer matrix, in a first polymerization stage in the presence of:

a Ziegler-Natta catalyst comprising a titanium component, Ti, and an internal donor selected from the group comprising phthalates, diethers, and diesters; and
an external donor, Si, comprising an organosilane used at a predetermined Si/Ti molar ratio,

transferring the propylene polymer matrix to a second polymerization stage arranged in series with the first polymerization stage; and
polymerizing propylene and ethylene in the second polymerization stage to obtain a heterophasic propylene copolymer composition,
wherein when the propylene polymer matrix comprises 0 wt% of comonomer, the predetermined Si/Ti molar ratio is < 3, and
when the propylene polymer matrix comprises from more than 0 to less than 0.5 wt% of comonomer based on the total weight of the propylene polymer matrix, the predetermined Si/Ti molar ratio is < 12.

10. The process of claim 9, wherein the Ziegler-Natta catalyst is a phthalate-based Ziegler-Natta catalyst.

11. The process of claim 9 or claim 10, further comprising adjusting a feed rate(s) of propylene and optional comonomer until a propylene polymer matrix having an analytical temperature rising elution fractionation, ATREF, peak temperature (T3) lower than or equal to 117°C is obtained, the ATREF peak temperature (T3) being determined by a CRYSTAF-TREF instrument.

12. The process of any one of claims 9-11, wherein the process further comprising mixing the heterophasic propylene copolymer composition under melt conditions with at least one organic peroxide.

13. Use of a heterophasic propylene copolymer composition as defined in any one of claims 1-8 for producing a film having a Sealing Performance Index of at least 35, wherein the Sealing Performance Index is defined by the following equation:

$$Sealing\ Performance\ Index = \left(F_{max}\ (at\ 145°C)\left[\frac{N}{15mm}\right] + F_{max}\ (at\ 165°C)\left[\frac{N}{15mm}\right]\right) /$$

$$\left[\frac{N}{15mm}\right],$$

wherein $F_{max}$ is the maximum force required to break the seal in accordance with ASTM F 88-05.

14. An article comprising the heterophasic propylene copolymer composition of any one of claims 1-8, wherein the article is selected from the group comprising films, pouches, lids, bags, sachets, and labels.

FIG. 1

FIG. 2

## Sealing Performance Index [-]

FIG. 3

## Film Tensile Performance Index [-]

FIG. 4

## EUROPEAN SEARCH REPORT

Application Number

EP 25 15 3188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/077881 A2 (EXXONMOBIL CHEM PATENTS INC [US]; JIANG PEIJUN [US] ET AL.) 8 July 2010 (2010-07-08) * paragraphs [0136], [0144]; examples 1, 2, 4-8; tables 1, 2 * ----- | 1-8,13, 14 | INV. C08F210/06 B32B27/32 C08L23/14 |
| A | US 6 593 442 B2 (BASELL POLYPROPYLEN GMBH [US]) 15 July 2003 (2003-07-15) * claim 5; examples 1, 2; tables 1, 2 * ----- | 1-8,13, 14 | |

|  |
|---|
| TECHNICAL FIELDS SEARCHED (IPC) |
| C08F C08J B32B C08L |

The present search report has been drawn up for all claims

| Place of search | Date of completion of the search | Examiner |
|---|---|---|
| Munich | 2 July 2025 | Bernhardt, Max |

EPO FORM 1503 03.82 (P04C01)

EP 4 778 948 A1

Europäisches Patentamt

European Patent Office

Office européen des brevets

**Application Number**

EP 25 15 3188

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8, 13, 14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 25 15 3188

The Search Division considers that the present European patent application does not comply with the requirements of unity of invention and relates to several inventions or groups of inventions, namely:

1. claims: 1-8, 13, 14

A heterophasic propylene copolymer composition comprising:
(a) from 74 to 93 wt% of a propylene polymer matrix
comprising: either a propylene homopolymer; or a propylene
copolymer comprising less than 0.5 wt% of a comonomer based
on the total weight of the propylene polymer matrix; and
(b) from 7 to 26 wt% of a propylene ethylene copolymer
dispersed in the propylene polymer matrix,
wherein the heterophasic propylene copolymer composition:
has an analytical temperature rising elution fractionation,
ATREF, peak temperature (T3) lower than or equal to 117.0°C,
comprises an ethylene content in the range of from 4.0 to 17
wt% and
has a xylene soluble content, XS, in a range of from 9 to 22
wt%.
---

2. claims: 9-12

Process for producing a heterophasic propylene copolymer
composition, the process comprising:
polymerizing propylene and optionally a comonomer to produce
either a propylene homopolymer or a propylene copolymer
comprising less than 0.5 wt% of comonomer, based on the
total weight of the propylene polymer matrix, in a first
polymerization stage in the presence of:
a Ziegler-Natta catalyst comprising a titanium component,
Ti, and an internal donor selected from the group comprising
phthalates, diethers, and diesters; and
an external donor, Si, comprising an organosilane used at a
predetermined Si/Ti molar ratio,
transferring the propylene polymer matrix to a second
polymerization stage arranged in series with the first
polymerization stage; and
polymerizing propylene and ethylene in the second
polymerization stage to obtain a heterophasic propylene
copolymer composition,
wherein when the propylene polymer matrix comprises 0 wt% of
comonomer, the predetermined Si/Ti molar ratio is < 3, and
when the propylene polymer matrix comprises from more than 0
to less than 0.5 wt% of comonomer based on the total weight
of the propylene polymer matrix, the predetermined Si/Ti
molar ratio is < 12.
---

## ANNEX TO THE EUROPEAN SEARCH REPORT
## ON EUROPEAN PATENT APPLICATION NO.

EP 25 15 3188

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | Publication date | Patent family member(s) | Publication date |
|---|---|---|---|
| WO 2010077881 A2 | 08-07-2010 | CN 102245696 A | 16-11-2011 |
| | | CN 102245699 A | 16-11-2011 |
| | | EP 2376567 A2 | 19-10-2011 |
| | | EP 2376570 A2 | 19-10-2011 |
| | | ES 2425081 T3 | 11-10-2013 |
| | | US 2010152382 A1 | 17-06-2010 |
| | | WO 2010075106 A2 | 01-07-2010 |
| | | WO 2010075107 A2 | 01-07-2010 |
| | | WO 2010075111 A2 | 01-07-2010 |
| | | WO 2010077881 A2 | 08-07-2010 |
| US 6593442 B2 | 15-07-2003 | AT E329942 T1 | 15-07-2006 |
| | | DE 19962130 A1 | 05-07-2001 |
| | | EP 1110976 A1 | 27-06-2001 |
| | | JP 2001247729 A | 11-09-2001 |
| | | US 2001004662 A1 | 21-06-2001 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3650494 A2
- EP 2829397 A1
- WO 2022263345 A1
- EP 3526286 B1
- EP 3456776 A1

**Non-patent literature cited in the description**

- **PAULIK, CHRISTIAN et al.** *Macromol. Chem. Phys.*, 2021, vol. 222, 2100302
- **PASQUINI, N.** Polypropylene Handbook. 2005
- **MORRIS, BARRY A.** The Science and Technology of Flexible Packaging: Multilayer Films from Resin and Process to End Use. William Andrew, 2017, 181-257
- **HAALAND et al.** *Anal. Chem.*, 1988, vol. 60, 1193-1202
- **WILHELM, M.** *Macromolecular materials and engineering*, 2002, vol. 287 (2), 83-105
- **HYUN, KYU et al.** *Progress in polymer science*, 2011, vol. 36 (12), 1697-1753